# EUROPEAN PATENT APPLICATION

(11) **EP 4 312 169 A1**
(43) Date of publication of application: **31.01.2024**
(21) Application number: 23182624.9
(22) Date of filing: 30.06.2023
(51) Int. Cl.: G06Q 10/0639, G06Q 50/20, G09B 5/08, G09B 7/08, G09B 7/12, G09B 9/08, G09B 19/16

(54) **PILOT TRAINING EVALUATION SYSTEM**

(30) Priority: 25.07.2022 US 202217814719
(71) Applicant: The Boeing Company, Arlington, VA 22202 (US)
(72) Inventor: ALVAREZ-PINTOR, Miriam C., Arlington, 22202 (US); BEYGI, Shervin, Arlington, 22202 (US); CHUNG, Kelly Anne, Arlington, 22202 (US)
(74) Representative: Morrall, Jonathan Ian McLachlan

(57) **Abstract**

A pilot training evaluation system and method includes receiving a first training performance data set. The pilot training evaluation system and method also includes analyzing the first training performance data set to determine a correlation between the first training performance data set and a training data comparison set, generating a training modification recommendation for an automated training system based at least on the correlation, and communicating the training modification recommendation to the automated training system.

## Description

### FIELD OF THE DISCLOSURE

The subject disclosure is generally related to control of automated pilot training evaluation systems.

### BACKGROUND

To improve the efficiency and efficacy of automated instructional materials, myriad industries have introduced automated learning systems into their training and education curricula. As these systems proliferate, it is becoming increasingly important to improve the effectiveness and efficiency of such automated learning systems.

One method of improving the effectiveness and efficiency of automated learning systems is to improve the rate at which feedback is provided to the automated learning system regarding student performance, as well as improving the quality of that feedback. In certain current learning systems, there is no data-driven method to improve training courses and/or training performance. Certain current methods for providing automated learning, particularly, pilot training, have myriad areas that are insufficiently measured, leaving many unknowns regarding actual student performance.

### SUMMARY

In a particular implementation, a method includes receiving a first training performance data set. The method also includes analyzing the first training performance data set to determine a correlation between the first training performance data set and a training data comparison set. The method also includes generating a training modification recommendation for an automated training system based at least on the correlation. The method also includes communicating the training modification recommendation to the automated training system.

In another particular implementation, a system includes a memory configured to store instructions and one or more processors configured to receive a first training performance data set. The one or more processors are also configured to analyze the first training performance data set to determine a correlation between the first training performance data set and a training data comparison set. The one or more processors are also configured to generate a training modification recommendation for an automated training system based at least on the correlation. The one or more processors are also configured to communicate the training modification recommendation to the automated training system.

In some examples, a non-transient, computer-readable medium stores instructions that, when executed by one or more processors, cause the one or more processors to initiate, perform, or control operations including receiving a first training performance data set. The operations also include analyzing the first training performance data set to determine a correlation between the first training performance data set and a training data comparison set. The operations also include generating a training modification recommendation for an automated training system based at least on the correlation. The operations also include communicating the training modification recommendation to the automated training system.

In some examples, a device includes means for receiving a first training performance data set. The device also includes means for analyzing the first training performance data set to determine a correlation between the first training performance data set and a training data comparison set. The device also includes means for generating a training modification recommendation for an automated training system based at least on the correlation. The device also includes means for communicating the training modification recommendation to the automated training system.

The features, functions, and advantages described herein can be achieved independently in various implementations or can be combined in yet other implementations, further details of which can be found with reference to the following description and drawings.

### BRIEF DESCRIPTION OF THE DRAWINGS

FIG. 1 depicts an example system for pilot training evaluation, in accordance with at least one implementation of the subject disclosure.
FIG. 2 depicts an example architecture for a pilot training evaluation system, in accordance with the subject disclosure.
FIG. 3 is a flow chart of an example of a method 300 for providing an automated pilot training evaluation system, in accordance with the subject disclosure.
FIG. 4 is a block diagram of a computing environment 400 including a computing device 410 configured to support aspects of computer-implemented methods and computer-executable program instructions (or code) according to the subject disclosure.

### DETAILED DESCRIPTION

Aspects disclosed herein use a pilot training evaluation system to improve the efficiency and effectiveness of automated learning systems, particularly by improving the manner in which automated learning systems deliver feedback to automated learning providers. Rather than provide feedback on portions of an automated learning system (e.g., a particular portion of the curriculum, a particular instructor or set of instructors, etc.) on an ad-hoc basis, the pilot training evaluation system automatically and systematically applies advanced analytical techniques to myriad different data sources in order to provide automated learning providers with a robust dataset that they can use to evaluate their pilot training programs.

For example, by providing for a dynamic comparison of instructors among various training locations, an automated learning system can evaluate the performance of an individual instructor against other instructors, instructors at other training locations, instructors at other automated learning providers, instructors specializing in other competencies, etc. The pilot training evaluation system can also identify differences in grading patterns within grading lessons and help improve automated learning curricula. Additionally, the pilot training evaluation system can enable automated learning providers to track progress of one or more instructors toward predetermined goals. The pilot training evaluation system can enable, among other improvements to automated learning systems, updates in curricula, additional training requirements for certain automated learning providers, additional training requirements for certain regions (e.g., geographical regions, competencies, operational areas, etc.), additional instructor training, etc.

Changing the types of feedback provided to automated learning systems can improve the rate at which the trainee learns the curriculum. For example, alerting an automated learning provider that a particular instructor and/or portion of curriculum is not performing up to a particular standard. The pilot training evaluation system can identify poor performance and provide the automated learning provider with recommended action(s) to improve performance.

In addition to pilot training, other types of automated learning systems can be improved without departing from the scope of the subject disclosure. For example, aircraft mechanic training, aircraft maintenance training, aircraft crew training, and other types of automated learning systems can be improved through a pilot training evaluation system. The subject disclosure illustrates systems and methods for using a pilot training evaluation system to improve a student's (or a group of students') use of an automated learning system to learn one or more lessons.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

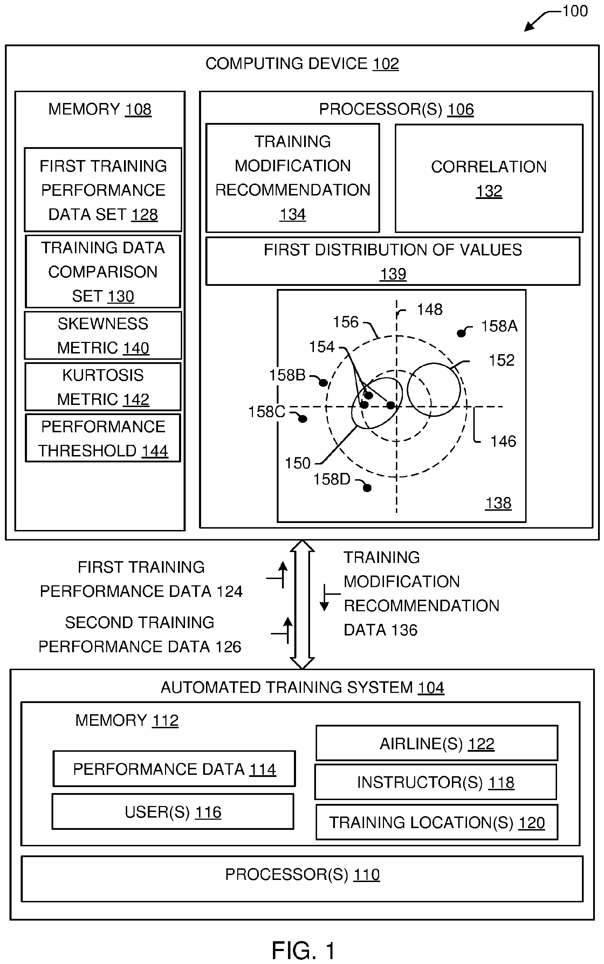

Particular implementations are described herein with reference to the drawings. In the description, common features are designated by common reference numbers throughout the drawings. As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1 depicts a system 100 including one or more processors ("processor(s)" 106 in FIG. 1), which indicates that in some implementations the system 100 includes a single processor 106 and in other implementations the system 100 includes multiple processors 106. For ease of reference herein, such features are generally introduced as "one or more" features and are subsequently referred to in the singular unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

FIG. 1 depicts an example system 100 for pilot training evaluation, in accordance with at least one implementation of the subject disclosure. In some implementations, the system 100 includes a computing device 102 configured to communicate with an automated training system 104 via first training performance data 124, second training performance data 126, and/or training modification recommendation data 136. The automated training system 104 can be configured to communicate the first training performance data 124 and/or the second training performance data 126 to the computing device 102. The first training performance data 124 and the second training performance data 126 are associated with training data associated with one or more users of the automated training system 104. The computing device 102 can be configured to automatically analyze the first training performance data 124 and/or the second training performance data 126 to provide an automated evaluation of certain aspects of the automated training system 104.

For example, an automated pilot training system can be implemented at a plurality of pilot training centers. In a particular example, the first training performance data 124 can be associated with one or more users of the automated training system 104 at a first location, while the second training performance data 126 can be associated with one or more users of the automated training system 104 at a second location. The automated training system 104 can be configured to communicate the first and second training performance data 124, 126 to the computing device 102, which can be configured to automatically analyze the first and second training performance data 124, 126 to generate one or more training modification recommendations 134, and to transmit data associated therewith back to the automated training system 104 as training modification recommendation data 136. As described in more detail below, the training modification recommendation(s) 134 can include, among other things, an alert indicating training performance fails to satisfy a performance threshold, a recommendation to update training material, an indication of a corrective action associated with one or more users of the automated training system, a training performance report, an indication of an instructor performance associated with a particular instructor, and/or some combination thereof. An exemplary training modification recommendation 138 is illustrated in FIG. 1 and is described in more detail below.

In some implementations, the computing device 102 can include one or more processors 106 coupled to a memory 108. The processor(s) 106 are configured to receive at least the first training performance data 124 associated with training data of one or more users of the automated training system 104. In a particular implementation, the first training performance data 124 can include one or more data sets, which the computing device 102 can be configured to store in the memory 108 (e.g., as the first training performance data set 128). In some aspects, the first training performance data set 128 can include particular data associated with a particular group of users of the automated training system 104, a particular portion of the automated training curriculum, a particular location at which the automated training system 104 has been deployed, and/or some other appropriate set of training performance data. For example, the first training performance data set 128 can include a plurality of grading metrics (e.g., individual grades, cumulative grades, etc.) assigned to one or more users of the automated training system 104.

In the same or alternative aspects, the processor(s) 106 can also be configured to receive the second training performance data 126 associated with training data of one or more users of the automated training system 104. In a particular aspect, the second training performance data 126 can include one or more data sets, which the computing device can be configured to store in the memory 108. As with the first training performance data set 128, data sets of the second training performance data 126 can include particular data associated with another particular group of users of the automated training system 104, another particular portion of the automated training curriculum, another particular location at which the automated training system 104 has been deployed, and/or some other appropriate set of training performance data.

For example, the first training performance data set 128 can include training data associated with a first group of users of the automated training system 104, while a second training performance data set can include training data associated with a second group of users of the automated training system 104. In a particular example, the first group of users can be different from the second group of users. In another particular example, the first group of users can be associated with a group of users at a particular point in time, while the second group of users can be associated with the same group of users at another particular point in time. In yet another particular example, the first group of users can be associated with a group of users training in a first curriculum competency (e.g., a flight training curriculum), while the second group of users can be associated with the same and/or another group of users training in a second curriculum competency (e.g., a pre-flight curriculum). In yet another particular example, the first group of users can be associated with a group of users at a first geographical area (e.g., city, state, country, etc.), while the second group of users can be associated with a second geographical area. In yet another particular example, the first group of users can be associated with a group of users taught by a first instructor, while the second group of users can be associated with the same and/or another group of users taught by a second instructor. In yet another particular example, the first group of users can be associated with a group of users at a first training location (e.g., a training facility owned and/or operated by a particular company), while the second group of users can be associated with a second training location (e.g., another training facility owned and/or operated by the same and/or different company).

In some implementations, the processor(s) 106 can be further configured to analyze the first training performance data set 128 to determine a correlation 132 between the first training performance data set 128 and one or more training data comparison sets 130. In a particular implementation, the training data comparison set(s) 130 can be stored at the memory 108 of the computing device 102.

In a particular implementation, the processor(s) 106 can be configured to analyze the first training performance data set 128 by analyzing the first training performance data set 128 to determine a concordance correlation coefficient associated with the first training performance data set 128 and the training data comparison set(s) 130. The correlation 132, determined by the processor(s) 106, can also be stored at the memory 108. The concordance correlation coefficient is a statistical analysis tool used to measure an agreement between two variables, particularly evaluating how well the first training performance data set 128 can reproduce the training data comparison set(s) 130. In other implementations, other methods of determining the correlation 132 can be used without departing from the scope of the subject disclosure. For example, the processor(s) 106 can be configured to determine the correlation 132 by determining a Pearson correlation coefficient between the first training performance data set 128 and the training data comparison set(s) 130.

In some implementations, the computing device 102 can be configured to store the training data comparison set(s) 130 in the memory 108 for use by the processor(s) 106. In some aspects, a training data comparison set 130 can include the second training performance data set, as described in more detail above. In such an aspect, the processor(s) 106 can be configured to analyze the first training performance data set 128 against the second training performance data set in order to determine the correlation 132 between the two training performance data sets. In the same or alternative aspects, the training data comparison set 130 can include a control performance data set. The control performance data set can include, for example, data associated with a particular standard or threshold against which actual training performance can be measured. Such a standard can be an industry standard, a corporate standard, or some other appropriate standard or threshold for acceptable training performance.

In some implementations, the computing device 102 can be configured to generate the training modification recommendation 134 for the automated training system 104 based at least on the correlation 132. As described in more detail above, the training modification recommendation 134 can include a variety of presentations including a graphical representation, alert(s), curriculum update recommendation(s), etc. In a particular implementation, the computing device 102 can be configured to generate the training modification recommendation 134 based on one or more results of an analysis of a distribution of values based on the first training performance data set 128. In some aspects, the processor(s) 106 of the computing device 102 can be configured to determine a first distribution of values 139 based on the first training performance data set 128. The first distribution of values 139 can be, for example, a value distribution curve associated with the first training performance data set 128. In a particular aspect, the computing device 102 can be further configured to store the first distribution of values 139 at the memory 108.

In some aspects, the processor(s) 106 can be further configured to determine one or more metrics associated with the first distribution of values 139. For example, the processor(s) 106 can be configured to determine a skewness metric associated with the first distribution of values 139. The skewness metric can measure, for example, the symmetry (or asymmetry) of a particular distribution curve. In a particular example, if the first training performance data set 128 includes data associated with a group of users of the automated training system 104 that were taught by a particular instructor, the distribution of user grades in a particular course taught by the particular instructor can be represented by the first distribution of values 139. The skewness metric 140 can measure, for example, how far the particular grade distribution deviates from a desired grade distribution. For example, if the ideal grade distribution is a normal distribution, a skewness metric with a value of zero can indicate that the particular instructor distributes grades along a normal distribution, matching the ideal grade distribution. A positive value of the skewness metric can indicate that the particular instructor distributes grades along a distribution with a longer tail on a higher end. Thus, the particular instructor gives more negative grades than is ideal. A negative value of the skewness metric can indicate that the particular instructor distributes grades along a distribution with a longer tail on a lower end. Thus, the particular instructor gives more positive grades than is ideal.

In the same or alternative aspects, the processor(s) 106 can be further configured to determine a kurtosis metric associated with the first distribution of values 139. The kurtosis metric can measure, for example, the peakedness of a particular distribution curve. In the particular example above, a kurtosis metric with a value of zero can indicate that the particular instructor distributes grades along a normal distribution, matching the ideal grade distribution. A positive value of the kurtosis metric can indicate that the particular instructor distributes grades more heavily at a central point along the distribution. Thus, the particular instructor gives more middle-level grades than is ideal. A negative value of the kurtosis metric can indicate that the particular instructor distributes grades more heavily along the tails of the distribution. Thus, the particular instructor gives fewer middle-level grades than is ideal.

In some implementations, the processor(s) 106 of the computing device 102 can be configured to generate the training modification recommendation 134 based at least on one or both of the skewness metric 140 and the kurtosis metric 142 as well as the correlation 132. For example, if data in the first training performance data set 128 associated with a particular instructor has a negative value for the skewness metric 140 and a correlation 132 that indicates a low correlation between the first training performance data set 128 and the training data comparison set 130, this can indicate that the particular instructor grades too generously. The processor(s) 106 can be configured to generate the training modification recommendation 134 based on an analysis of the various metrics and communicate the training modification recommendation data 136 associated with the training modification recommendation 134 to the automated training system 104. The automated training system 104 can be configured to perform one or more automated actions based on the training modification recommendation data 136, including generating an alert indicating that training performance fails to satisfy a performance threshold 144 (e.g., alerting a curriculum supervisor). The performance threshold 144, stored at the memory 108, can indicate one or more performance standards associated with the group of users of the automated training system 104 associated with the first training performance data set 128. For example, the performance threshold 144 can indicate that a particular percentage of students (e.g., 50%) meet a particular grading threshold (e.g., greater than or equal to 70%).

As another example, if data in the first training performance data set 128 associated with a particular instructor has a positive value for the skewness metric 140 and a correlation 132 that indicates a high correlation between the first training performance data set 128 and the training data comparison set 130, this can indicate that update may be needed to a curriculum of the automated training system. The processor(s) 106 can be configured to generate the training modification recommendation 134 based on an analysis of the various metrics and communicate the training modification recommendation data 136 associated with the training modification recommendation 134 to the automated training system 104. The automated training system 104 can be configured to perform one or more automated actions based on the training modification recommendation data 136, including generating an alert indicating that training performance fails to satisfy a performance threshold 144 (e.g., alerting a curriculum supervisor) and/or an indication of a corrective action associated with one or more users of the automated training system 104 (e.g., automatically generating curriculum updates, etc.). The performance threshold 144, stored at the memory 108, can indicate one or more performance standards associated with the group of users of the automated training system 104 associated with the first training performance data set 128. For example, the performance threshold 144 can indicate that a particular percentage of students (e.g., 50%) meet a particular grading threshold (e.g., greater than or equal to 70%).

As yet another example, if data in the first training performance data set 128 associated with a particular instructor has a negative value for the kurtosis metric 142, this can indicate that the may be gaps in student performance. The processor(s) 106 can be configured to generate the training modification recommendation 134 based on an analysis of the various metrics and communicate the training modification recommendation data 136 associated with the training modification recommendation 134 to the automated training system 104. The automated training system 104 can be configured to perform one or more automated actions based on the training modification recommendation data 136, including generating an alert indicating that training performance fails to satisfy a performance threshold 144 (e.g., alerting a curriculum supervisor) and/or an indication of a corrective action associated with one or more users of the automated training system 104 (e.g., automatically generating additional training material such as practice questions, etc.).

In some aspects, the training modification recommendation 134 can include a training performance report. The training performance report can include a variety of data presented in a variety of appropriate forms configured to communicate one or more facets of training performance without departing from the scope of the subject disclosure. For example, the training performance report can include a graphical representation based at least on the correlation 132. In a particular example, a graphical representation can include data presented along a plurality of axes. A first axis can be associated with a first training metric, while a second axis can be associated with a second training metric. The processor(s) 106 can be configured to determine one or more values of the first and second training metrics by analyzing the first training performance data set 128. For example, a particular graphical representation can include data presented along a first, horizontal axis associated with the skewness metric 140 and a second, vertical axis associated with the kurtosis metric 142. Exemplary training modification recommendation 138, described below, illustrates one such exemplary graphical representation. In the same or alternative examples, one or more of the training metrics can be another mathematical moment metric.

The exemplary training modification recommendation 138 illustrates a plurality of data points plotted a long a first, horizontal axis 146 associated with the skewness metric 140 of the first training performance data set 128 and a second, vertical axis 148 associated with the kurtosis metric 142 of the first training performance data set 128. The exemplary training modification recommendation 138 also illustrates a plurality of performance regions 150, 152. The first performance region 150 illustrates a cluster of training performance data points 154 within a region of acceptable performance 156. The first performance region 150 can illustrate, for example, the current measured performance in the automated training system 104 that is within the performance threshold 144. The second performance region 152 illustrates a region within the exemplary training modification recommendation 138 associated with an ideal clustering of training performance data points. The second performance region 152 can illustrate, for example, the desired performance in the automated training system 104.

The exemplary training modification recommendation 138 also illustrates a plurality of outlying training performance data points 158. The outlying training performance data points 158 can illustrate, for example, training performance that falls beyond the performance threshold 144. In a particular example, the outlying training performance data points 158 can be presented with differing graphical representations depending on the distance from the center of the exemplary training modification recommendation 138 to the particular outlying training performance data point 158. For example, the outlying training performance data points 158B, 158C can be presented in a first color (e.g., orange) to indicate that they are outlying data, but may not be as large a concern to the automated training system 104, while the outlying training performance data points 158A, 158D can be presented in a second color (e.g., red) to indicate that they are serious outliers that can require more immediate and/or more serious corrective action.

In some implementations, the processor(s) 106 of the computing device 102 can be further configured to communicate the training modification recommendation 134 to the automated training system 104. For example, the processor(s) 106 can be configured to generate the training modification recommendation data 136 for communication to the automated training system 104.

In operation, the system 100 can be configured to provide an exemplary automated pilot training evaluation system that can be used across the industry to evaluate the quality of pilot training automatically and rigorously. For example, the system 100 can be configured to generate the training modification recommendation 134, where the training modification recommendation 134 includes an indication of instructor performance associated with one or more pilot instructors based at least on the correlation 132, the skewness metric 140, and the kurtosis metric 142. The system 100 can be configured to compare different instructors for the same airline, a first instructor associated with a first airline and a second instructor associated with a second airline, instructors in different geographic regions, instructors within a particular geographic region, instructors across multiple curriculum competencies, instructors within a particular curriculum competency, etc.

The automated training system 104 can be configured to provide the first training performance data 124 and/or the second training performance data 126 to the computing device 102 to enable the system 100 to generate the training modification recommendation 134. The automated training system 104 can include one or more processors 110 coupled to a memory 112. The automated training system 104 can be implemented as a stand-alone computing device (e.g., a flight simulator kiosk) and/or a component of another computing device (e.g., as an app or program running on a smart phone or laptop computer). The automated training system 104 can also include components not illustrated in FIG. 1. For example, to monitor input from and/or interaction with a user, the automated training system 104 can also include one or more input/output interfaces, one or more displays, one or more network interfaces, etc. Further, although FIG. 1 illustrates the memory 112 of the automated training system 104 as storing certain data described below, more, fewer, and/or different data can be present within the memory 112 without departing from the scope of the subject disclosure.

The automated training system 104 can store, at the memory 112, performance data 114, user(s) 116, airline(s) 122, instructor(s) 118, training location(s) 120, etc. This data can be used to generate the first and/or second training performance data 124, 126.

The performance data 114 can include data associated with the performance of one or more users of the automated training system 104 for one or more curriculum competencies. The user(s) 116 can include data associated with the identities-which may be anonymized, semi-anonymized, pseudo-anonymized, etc.-of the one or more users of the automated training system 104. Similarly, the airline(s) 122, instructor(s) 118, and/or the training location(s) 120 can include data associated with the airlines for whom training performance is measured, the identities of those instructors, and/or the identifiers of the various training locations. Depending on the particular implementation of the automated training system 104, there may be more, fewer, and/or different data between or among the automated training system 104. For example, a first automated training system may include user data (e.g., in the user(s) 116) that lists the user's first and last name, date of birth, etc., while a second automated training system may include user data (e.g., in the user(s) 116) that only lists a user's identification number. The processor(s) 110 of the automated training system 104 can be configured to gather, parse, and/or communicate the data in the memory 112 for communication to the computing device 102.

In some implementations, the processor(s) 106 of the computing device 102 can be configured to generate the first training performance data set 128 from the first training performance data 124 and/or the training data comparison set 130 from the second training performance data 126. This can include receiving a plurality of performance data requirements. The performance data requirements can describe, for example, what types of data within the first training performance data 124 will actually be used in determining the training modification recommendation 134, ensuring data integrity, and maintaining data standardization when receiving portions of the first training performance data 124 from a plurality of implementations of the automated training system 104. In some aspects, different implementations of the automated training system 104 can include different types of data from other implementations, more or less data on a particular topic than other implementations, store data in a different format than other implementations, etc.

The processor(s) 106 of the computing device 102 can be configured to process the plurality of performance data requirements to generate a single data mapping for the plurality of data requirements. This can allow, for example, the processor(s) 106 to receive and analyze data from disparate sources. The processor(s) 106 can be configured to generate the first training performance data set 128 using the single data mapping. In some aspects, the computing device 102 can also be configured to store the correlation 132 and the training modification recommendation 134 in the memory 108.

In some implementations, the processor(s) 106 of the computing device 102 can be configured to generate a performance dashboard based at least on the first training performance data set 128, the correlation 132, and the training modification recommendation 134. The performance dashboard can include analytical tools that can allow a user of the automated training system to access and track a plurality of training modification recommendations. For example, the performance dashboard can include an indication that the first training performance data set indicates that the performance of a first group of users of the automated training system 104 associated with the first training performance data set 128 fails to satisfy the performance threshold 144.

Although FIG. 1 illustrates certain operations occurring within the computing device 102 or the automated training system 104, certain operations can be performed by other components of the system 100 without departing from the scope of the subject disclosure. For example, the automated training system 104 can be configured to generate the first training performance data set 128 from the first training performance data 124 and/or generate the training data comparison data set 130 from the second training performance data 126.

Further, although FIG. 1 illustrates the computing device 102 and the automated training system 104 as separate, other configurations are possible without departing from the scope of the subject disclosure. For example, the computing device 102 and the automated training system 104 can be integrated into the electronic device. As an additional example, some or all components of the computing device 102 can be integrated into the same electronic device as some or all components of the automated training system 104. As a further example, one or more components of the computing device 102 and/or one or more components of the automated training system 104 can be distributed across a plurality of computing devices (e.g., a group of servers).

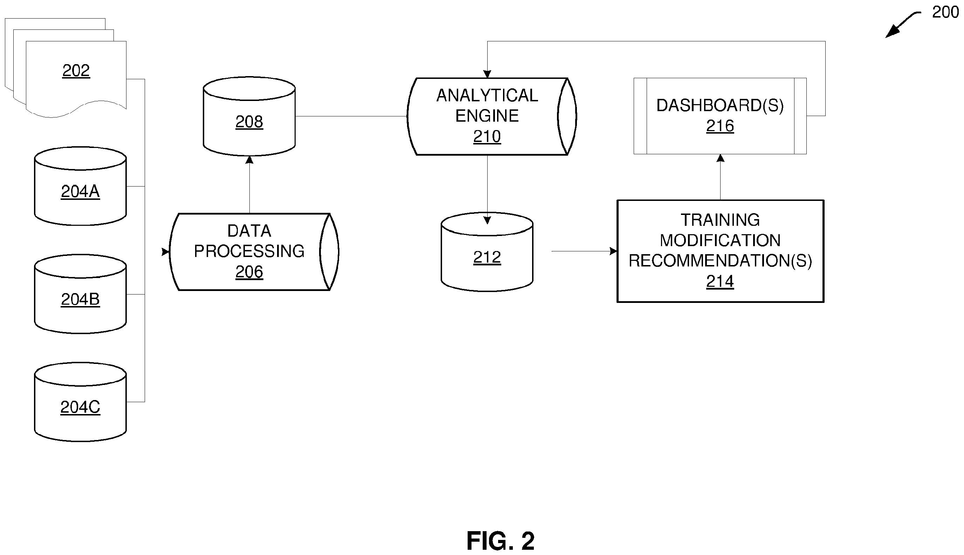

FIG. 2 depicts an example architecture for a pilot training evaluation system 200, in accordance with the subject disclosure. Generally, the system 200 corresponds with some or all of the example system 100 of FIG. 1. In some implementations, the system 200 includes a plurality of data requirements 202, 204. As described in more detail above with reference to FIG. 1, these data requirements can describe, for example, what types of data within the first training performance data 124 will actually be used in determining the training modification recommendation 134, ensuring data integrity, and maintaining data standardization when receiving portions of the first training performance data 124 from a plurality of implementations of the automated training system 104. In some aspects, different implementations of the automated training system 104 can include different types of data from other implementations, more or less data on a particular topic than other implementations, store data in a different format than other implementations, etc. For example, the files 202 of FIG. 2 can originate from a variety of different implementations of the automated training system 104 of FIG. 1. Likewise, the various database 204A, 204B, 204C can be a part of a pilot training evaluation system or could be implemented as a depository for training performance data (e.g., the performance data 114 of FIG. 1) from various pilot training evaluation systems.

In some implementations, the system 200 can also include a data processing module 206 coupled to the plurality of data requirements 202, 204. Data processing module can be one or more electronic devices and/or components of one or more electronic devices configured to extract, transform, and load, the data from the plurality of data requirements 202, 204. As described in more detail above with reference to FIG. 1, the system 200 can be configured to receive and analyze data from disparate sources. For example, the processor(s) 106 of FIG. 1 can be configured to generate the first training performance data set 128 using a single data mapping for all of the data from the plurality of data requirements 202, 204. In some implementations, the system 200 can also include a database 208 coupled to the data processing module 206. The database 208 can be any appropriate data storage device or devices configured to store the processed data generated by the data processing module 206.

In some implementations, the system 200 can also include the analytical engine 210 coupled to the database 208. Generally, the analytical engine 210 corresponds to the processor(s) 106 of FIG. 1, and is configured to analyze the data stored in the database 208 to determine the correlation 132 between the first training performance data set 128 and the training data comparison set 130 and to generate the training modification recommendation 134 for the automated training system 104 based at least on the correlation 132, as described in more detail above with reference to FIG. 1.

In some implementations, the system 200 can also include a database 212 coupled to the analytical engine 210. The database 212 can be any appropriate data storage device or devices configured to store the data generated by the analytical engine 210. Generally, the database 212 corresponds to the memory 108 of FIG. 1, storing the first training performance data set 128, the training data comparison set 130, the skewness metric 140, the kurtosis metric 142, and the performance threshold 144.

As described in more detail above with reference to FIG. 1, the pilot training evaluation system can be configured to generate a training modification recommendation 214 (e.g., the training modification recommendation 134 of FIG. 1) for communication to the automated training system. The training modification recommendation 214 can come in many forms, including alerts, recommendations for corrective action, etc. The training modification recommendation 214 can also include, for example, curriculum update recommendation(s). In a particular aspect, a curriculum update recommendation can include automatically adding a particular training module for a particular group of instructors, students, etc. (for one or more locations), automatically removing a particular training module, etc.

As described in more detail above with reference to FIG. 1, the pilot training evaluation system can also be configured to generate one or more dashboards 216 based at least on the first training performance data set, the correlation, and the training modification recommendation 214. In the example of the system 200, the dashboard(s) 216 can be communicated to one or more users of the system 200, one or more other components of the system 200, or some combination thereof. For example, data associated with one or more of the dashboards can be communicated back to the analytical engine 210 for further training evaluation and improvement.

Although FIG. 2 illustrates certain operations occurring within various components of the system 200, certain operations can be performed by other components of the system 200 without departing from the scope of the subject disclosure. For example, the operations performed by the data processing module 206 can be decentralized and co-located with each individual data requirement 202, 204. As another example, the dashboard(s) 216 and the training modification recommendation(s) 214 can be generated at the analytical engine 210.

Further, although FIG. 2 illustrates the various components of the system 200 as separate, other configurations are possible without departing from the scope of the subject disclosure. For example, the data processing module 206 can be decentralized and co-located with each individual data requirement 202, 204. As another example, the dashboard(s) 216 and the training modification recommendation(s) 214 can be co-located at the analytical engine 210.

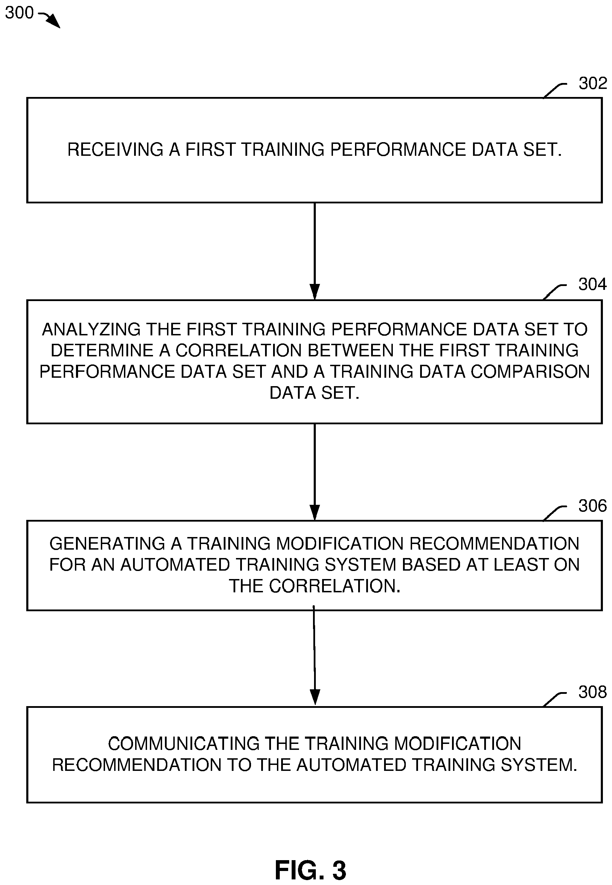

FIG. 3 is a flow chart of an example of a method 300 for providing an automated pilot training evaluation system, in accordance with the subject disclosure. The method 300 can be initiated, performed, or controlled by one or more processors executing instructions, such as by the processor(s) 106 of FIG. 1 executing instructions from the memory 108.

In some implementations, the method 300 includes, at 302, receiving a first training performance data set. For example, the processor(s) 106 of FIG. 1 can receive the first training performance data set 128 associated with the performance of one or more users undertaking a curriculum at the automated training system 104.

In the example of FIG. 3, the method 300 also includes, at 304, analyzing the first training performance data set to determine a correlation between the first training performance data set and a training data comparison data set. For example, the processor(s) 106 of FIG. 1 can analyze the first training performance data set 128 to determine the correlation 132 between the first training performance data set 128 and the training data comparison data set 130.

In the example of FIG. 3, the method 300 also includes, at 306, generating a training modification recommendation for an automated training system based at least on the correlation. For example, the processor(s) 106 of FIG. 1 can generate the training modification recommendation 134 for the automated training system 104 based at least on the correlation 132. In the example of FIG. 3, the method 300 also includes, at 308, communicating the training modification recommendation to the automated training system. For example, the processor(s) 106 of FIG. 1 can communicate the training modification recommendation 134 to the automated training system 104.

Although the method 300 is illustrated as including a certain number of steps, more, fewer, and/or different steps can be included in the method 300 without departing from the scope of the subject disclosure. For example, the method 300 can vary depending on the count and variety of data requirements available for processing, as described in more detail above with reference to FIG. 2. For example, the method 300 can communicate a training modification recommendation to one automated training system (and/or a portion of an automated training system) prior to, or simultaneously with, generating a training modification recommendation for another automated training system (and/or another portion of the automated training system).

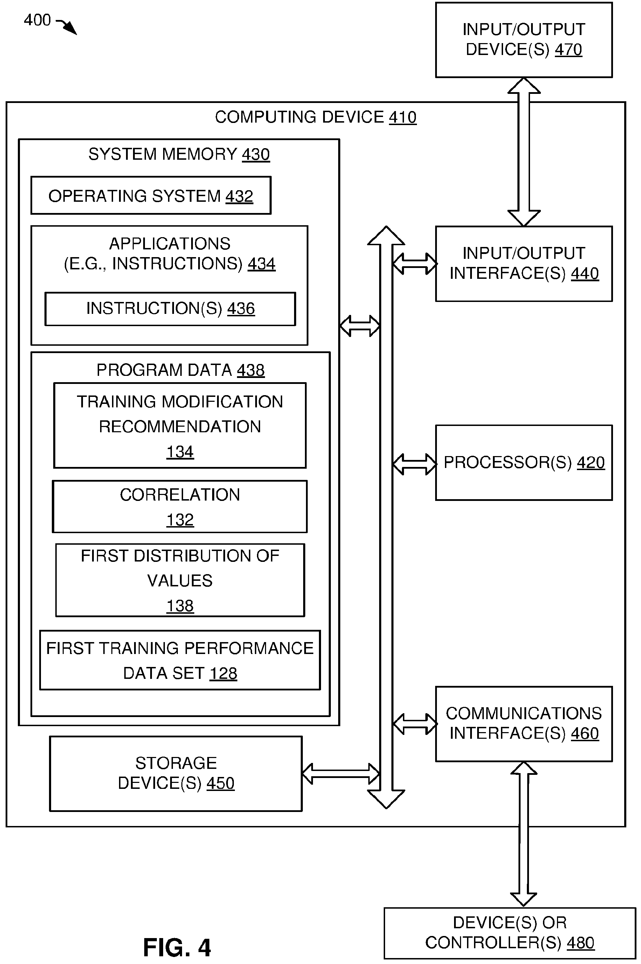

FIG. 4 is a block diagram of a computing environment 400 including a computing device 410 configured to support aspects of computer-implemented methods and computer-executable program instructions (or code) according to the subject disclosure. For example, the computing device 410, or portions thereof, is configured to execute instructions to initiate, perform, or control one or more operations described in more detail above with reference to FIGS. 1-3. In a particular aspect, the computing device 410 can include the computing device 102 and/or the automated training system 104 of FIG. 1; the data processing module 206 and/or the analytical engine 210 of FIG.2; one or more servers; one or more virtual devices; or a combination thereof.

The computing device 410 includes one or more processors 420. In a particular aspect, the processor(s) 420 correspond to the processor(s) 106 of FIG. 1. The processor(s) 420 are configured to communicate with system memory 430, one or more storage devices 450, one or more input/output interfaces 440, one or more communications interfaces 460, or any combination thereof. The system memory 430 includes volatile memory devices (e.g., random access memory (RAM) devices), nonvolatile memory devices (e.g., read-only memory (ROM) devices, programmable read-only memory, and flash memory), or both. The system memory 430 stores an operating system 432, which can include a basic input/output system for booting the computing device 410 as well as a full operating system to enable the computing device 410 to interact with users, other programs, and other devices. The system memory 430 stores system (program) data 438, such as the instructions 436, the training modification recommendation 134, the correlation 132, the first distribution of values 139, the first training performance data set 128 of FIG. 1, or a combination thereof.

The system memory 430 includes one or more applications 434 (e.g., sets of instructions) executable by the processor(s) 420. As an example, the one or more applications 434 include the instructions 436 executable by the processor(s) 420 to initiate, control, or perform one or more operations described with reference to FIGS. 1-3. To illustrate, the one or more applications 434 include the instructions 436 executable by the processor(s) 420 to initiate, control, or perform one or more operations described with reference to generating the training modification recommendation 134, the correlation 132, or a combination thereof.

In a particular implementation, the system memory 430 includes a non-transitory, computer readable medium (e.g., a computer-readable storage device) storing the instructions 436 that, when executed by the processor(s) 420, cause the processor(s) 420 to initiate, perform, or control operations for an automated pilot training evaluation system. The operations include analyzing the first training performance data set to determine a correlation between the first training performance data set and a training data comparison set. The operations also include generating a training modification recommendation for an automated training system based at least on the correlation. The operations also include communicating the training modification recommendation to the automated training system.

The one or more storage devices 450 include nonvolatile storage devices, such as magnetic disks, optical disks, or flash memory devices. In a particular example, the storage devices 450 include both removable and non-removable memory devices. The storage devices 450 are configured to store an operating system, images of operating systems, applications (e.g., one or more of the applications 434), and program data (e.g., the program data 438). In a particular aspect, the system memory 430, the storage devices 450, or both, include tangible computer-readable media. In a particular aspect, one or more of the storage devices 450 are external to the computing device 410.

The one or more input/output interfaces 440 enable the computing device 410 to communicate with one or more input/output devices 470 to facilitate user interaction. For example, the one or more input/output interfaces 440 can include a display interface, an input interface, or both. For example, the input/output interface 440 is adapted to receive input from a user, to receive input from another computing device, or a combination thereof. In some implementations, the input/output interface 440 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device(s) 470 include one or more user interface devices and displays, including some combination of buttons, keyboards, pointing devices, displays, speakers, microphones, touch screens, and other devices.

The processor(s) 420 are configured to communicate with devices or controllers 480 via the one or more communications interfaces 460. For example, the one or more communications interfaces 460 can include a network interface. The devices or controllers 480 can include, for example, the automated training system 104 of FIG. 1.

In some implementations, a non-transitory, computer readable medium (e.g., a computer-readable storage device) stores instructions that, when executed by one or more processors, cause the one or more processors to initiate, perform, or control operations to perform part of or all the functionality described above. For example, the instructions can be executable to implement one or more of the operations or methods of FIGS. 1-3. In some implementations, part or all of one or more of the operations or methods of FIGS. 1-3 can be implemented by one or more processors (e.g., one or more central processing units (CPUs), one or more graphics processing units (GPUs), one or more digital signal processors (DSPs)) executing instructions, by dedicated hardware circuitry, or any combination thereof.

The illustrations of the examples described herein are intended to provide a general understanding of the structure of the various implementations. The illustrations are not intended to serve as a complete description of all of the elements and features of apparatus and systems that utilize the structures or methods described herein. Many other implementations can be apparent to those of skill in the art upon reviewing the disclosure. Other implementations can be utilized and derived from the disclosure, such that structural and logical substitutions and changes can be made without departing from the scope of the disclosure. For example, method operations can be performed in a different order than shown in the figures or one or more method operations can be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results can be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features can be grouped together or described in a single implementation for the purpose of streamlining the disclosure. Examples described above illustrate but do not limit the disclosure. It should also be understood that numerous modifications and variations are possible in accordance with the principles of the subject disclosure. As the following claims reflect, the claimed subject matter can be directed to less than all of the features of any of the disclosed examples. Accordingly, the scope of the disclosure is defined by the following claims and their equivalents.

Further, the disclosure comprises embodiments according to the following clauses:
According to Clause 1, a method includes receiving a first training performance data set; analyzing the first training performance data set to determine a correlation between the first training performance data set and a training data comparison set. The method also includes generating a training modification recommendation for an automated training system based at least on the correlation. The method also includes communicating the training modification recommendation to the automated training system.

Clause 2 includes the method of Clause 1, wherein the training data comparison set includes a second training performance data set.

Clause 3 includes the method of Clause 2, wherein the training data comparison set includes a control performance data set.

Clause 4 includes the method of Clause 2 or 3, wherein: the first training performance data set includes training data associated with a first group of users of the automated training system; and the second training performance data set includes training data associated with a second group of users of the automated training system.

Clause 5 includes the method of Clause 4, wherein the first group of users is different from the second group of users.

Clause 6 includes the method of Clause 4 or 5, wherein the first group of users is associated with training in a first training curriculum, and the second group of users is associated with the first group of users training in a second training curriculum.

Clause 7 includes the method of any of Clauses 4-6, wherein the first group of users is associated with a first geographical area and the second group of users is associated with a second geographical area.

Clause 8 includes the method of any of Clauses 4-7, wherein the first group of users is associated with a first instructor and the second group of users is associated with a second instructor.

Clause 9 includes the method of any of Clauses 4-8, wherein the first group of users is associated with a first training location and the second group of users is associated with a second training location.

Clause 10 includes the method of any of Clauses 1-9, wherein the method also includes determining a first distribution of values based on the first training performance data set. The method also includes determining a skewness metric based on the first distribution of values, wherein generating the training modification recommendation for the automated training system is further based at least on the skewness metric.

Clause 11 includes the method of any of Clauses 1-10, wherein the method also includes determining a first distribution of values based on the first training performance data set. The method also includes determining a kurtosis metric based on the first distribution of values, wherein generating the training modification recommendation for the automated training system is further based at least on the kurtosis metric.

Clause 12 includes the method of any of Clauses 1-11, wherein the training modification recommendation includes an alert indicating training performance fails to satisfy a performance threshold.

Clause 13 includes the method of any of Clauses 1-12, wherein the training modification recommendation includes a recommendation to update training material.

Clause 14 includes the method of any of Clauses 1-13, wherein the training modification recommendation includes an indication of a corrective action associated with one or more users of the automated training system.

Clause 15 includes the method of any of Clauses 1-14, wherein the training modification recommendation includes a training performance report.

Clause 16 includes the method of Clause 15, wherein the training performance report includes a graphical representation based at least on the correlation.

Clause 17 includes the method of Clause 16, wherein the method further includes analyzing the first training performance data set to determine one or more values of a first training metric based on the first training performance data set. The method also includes analyzing the first training performance data set to determine one or more values of a second training metric based on the first training performance data set, wherein a first axis of the graphical representation is associated with the first training metric and a second axis of the graphical representation is associated with the second training metric.

Clause 18 includes the method of Clause 17, wherein the method further includes including determining a first distribution of values based on the first training performance data set, and wherein the first training metric is a skewness metric based on the first distribution of values.

Clause 19 includes the method of Clause 18, wherein the second training metric is a kurtosis metric based on the first distribution of values.

Clause 20 includes the method of any of Clauses 17-19, further including determining a first distribution of values based on the first training performance data set, and wherein the first or second training metric is a mathematical moment metric based on the first distribution of values.

Clause 21 includes the method of any of Clauses 1-20, wherein analyzing the first training performance data set to determine the correlation includes analyzing the first training performance data set to determine a concordance correlation coefficient associated with the first training performance data set and the training data comparison set.

Clause 22 includes the method of any of Clauses 1-21, wherein the first training performance data set includes a plurality of grading metrics assigned to a user of the automated training system.

Clause 23 includes the method of any of Clauses 1-22, wherein: the training data comparison set includes a second training performance data set; the first training performance data set includes training data associated with a first group of users of the automated training system, the first group of users assigned to a first instructor; and the second training performance data set includes training data associated with a second group of users of the automated training system, the second group of users assigned to one or more second instructors; and further including: determining a first distribution of values based on the first training performance data set; determining a skewness metric based on the first distribution of values; and determining a kurtosis metric based on the first distribution of values; and wherein the training modification recommendation includes an indication of an instructor performance associated with the first instructor, the indication based at least on the skewness metric and the kurtosis metric.

Clause 24 includes the method of Clause 23, wherein the first instructor is associated with a first airline and the one or more second instructors are associated with a second airline.

Clause 25 includes the method of Clause 23 or 24, wherein the first instructor is associated with a first airline and the one or more second instructors are associated with the first airline, and wherein the first instructor is different from the one or more second instructors.

Clause 26 includes the method of any of Clauses 23-25, wherein the first instructor is associated with a first geographic region and the one or more second instructors is associated with a second geographic region.

Clause 27 includes the method of any of Clauses 23-26, wherein the first instructor is associated with a first geographic region and the one or more second instructors are associated with the first geographic region, and wherein the first instructor is different from the one or more second instructors.

Clause 28 includes the method of any of Clauses 23-27, wherein the first instructor is associated with a first curriculum competency and the one or more second instructors is associated with a second curriculum competency.

Clause 29 includes the method of any of Clauses 23-28, wherein the first instructor is associated with a first curriculum competency and the one or more second instructors are associated with the first curriculum competency, and wherein the first instructor is different from the one or more second instructors.

Clause 30 includes the method of any of Clauses 1-29, wherein receiving the first training performance data includes: receiving a plurality of performance data requirements; processing the plurality of performance data requirements to generate a single data mapping for the plurality of performance data requirements; and generating the first training performance data set.

Clause 31 includes the method of Clause 30, further including storing the correlation and the training modification recommendation in a memory.

Clause 32 includes the method of Clause 30 or 31, further including generating a performance dashboard based at least on the first training performance data set, the correlation, and the training modification recommendation.

Clause 33 includes the method of Clause 32, wherein the performance dashboard includes an indication that the first training performance data set indicates that performance of a first group of users of the automated training system associated with the first training performance data set fails to satisfy a performance threshold.

According to Clause 34, a system includes a memory configured to store instructions, and one or more processors configured to receive a first training performance data set. The one or more processors are also configured to analyze the first training performance data set to determine a correlation between the first training performance data set and a training data comparison set. The one or more processors are also configured to generate a training modification recommendation for an automated training system based at least on the correlation. The one or more processors are also configured to communicate the training modification recommendation to the automated training system.

Clause 35 includes the system of Clause 34, wherein the training data comparison set includes a second training performance data set.

Clause 36 includes the system of Clause 35, wherein the training data comparison set includes a control performance data set.

Clause 37 includes the system of Clause 35 or 36, wherein: the first training performance data set includes training data associated with a first group of users of the automated training system; and the second training performance data set includes training data associated with a second group of users of the automated training system.

Clause 38 includes the system of Clause 37, wherein the first group of users is different from the second group of users.

Clause 39 includes the system of Clause 37 or 38, wherein the first group of users is associated with training in a first training curriculum, and the second group of users is associated with the first group of users training in a second training curriculum.

Clause 40 includes the system of any of Clauses 37-39, wherein the first group of users is associated with a first geographical area and the second group of users is associated with a second geographical area.

Clause 41 includes the system of any of Clauses 37-40, wherein the first group of users is associated with a first instructor and the second group of users is associated with a second instructor.

Clause 42 includes the system of any of Clauses 37-41, wherein the first group of users is associated with a first training location and the second group of users is associated with a second training location.

Clause 43 includes the system of any of Clauses 34-42, wherein the one or more processors are further configured to: determine a first distribution of values based on the first training performance data set; and determine a skewness metric based on the first distribution of values; and wherein the one or more processors are configured to generate the training modification recommendation for the automated training system further based at least on the skewness metric.

Clause 44 includes the system of any of Clauses 34-43, wherein the one or more processors are further configured to: determine a first distribution of values based on the first training performance data set; and determine a kurtosis metric based on the first distribution of values; and wherein the one or more processors are configured to generate the training modification recommendation for the automated training system further based at least on the kurtosis metric.

Clause 45 includes the system of any of Clauses 34-44, wherein the training modification recommendation includes an alert indicating training performance fails to satisfy a performance threshold.

Clause 46 includes the system of any of Clauses 34-46, wherein the training modification recommendation includes a recommendation to update training material.

Clause 47 includes the system of any of Clauses 34-47, wherein the training modification recommendation includes an indication of a corrective action associated with one or more users of the automated training system.

Clause 48 includes the system of any of Clauses 34-47, wherein the training modification recommendation includes a training performance report.

Clause 49 includes the system of Clause 48, wherein the training performance report includes a graphical representation based at least on the correlation.

Clause 50 includes the system of Clause 49, wherein the one or more processors are further configured to: analyze the first training performance data set to determine one or more values of a first training metric based on the first training performance data set; analyze the first training performance data set to determine one or more values of a second training metric based on the first training performance data set; and wherein a first axis of the graphical representation is associated with the first training metric and a second axis of the graphical representation is associated with the second training metric.

Clause 51 includes the system of Clause 50, wherein the one or more processors are further configured to determine a first distribution of values based on the first training performance data set, and wherein the first training metric is a skewness metric based on the first distribution of values.

Clause 52 includes the system of Clause 51, wherein the second training metric is a kurtosis metric based on the first distribution of values.

Clause 53 includes the system of any of Clauses 50-52, wherein the one or more processors are further configured to determine a first distribution of values based on the first training performance data set, and wherein the first or second training metric is a mathematical moment metric based on the first distribution of values.

Clause 54 includes the system of any of Clauses 34-53, wherein the one or more processors are further configured to analyze the first training performance data set to determine the correlation by analyzing the first training performance data set to determine a concordance correlation coefficient associated with the first training performance data set and the training data comparison set.

Clause 55 includes the system of any of Clauses 34-54, wherein the first training performance data set includes a plurality of grading metrics assigned to a user of the automated training system.

Clause 56 includes the system of any of Clauses 34-55, wherein: the training data comparison set includes a second training performance data set; the first training performance data set includes training data associated with a first group of users of the automated training system, the first group of users assigned to a first instructor; and the second training performance data set includes training data associated with a second group of users of the automated training system, the second group of users assigned to one or more second instructors; and the one or more processors are further configured to: determine a first distribution of values based on the first training performance data set; determine a skewness metric based on the first distribution of values; and determine a kurtosis metric based on the first distribution of values; and wherein the training modification recommendation includes an indication of an instructor performance associated with the first instructor, the indication based at least on the skewness metric and the kurtosis metric.

Clause 57 includes the system of Clause 56, wherein the first instructor is associated with a first airline and the one or more second instructors are associated with a second airline.

Clause 58 includes the system of Clause 56 or 57, wherein the first instructor is associated with a first airline and the one or more second instructors are associated with the first airline, and wherein the first instructor is different from the one or more second instructors.

Clause 59 includes the system of any of Clauses 56-58, wherein the first instructor is associated with a first geographic region and the one or more second instructors is associated with a second geographic region.

Clause 60 includes the system of any of Clauses 56-59, wherein the first instructor is associated with a first geographic region and the one or more second instructors are associated with the first geographic region, and wherein the first instructor is different from the one or more second instructors.

Clause 61 includes the system of any of Clauses 56-60, wherein the first instructor is associated with a first curriculum competency and the one or more second instructors is associated with a second curriculum competency.

Clause 62 includes the system of any of Clauses 56-61, wherein the first instructor is associated with a first curriculum competency and the one or more second instructors are associated with the first curriculum competency, and wherein the first instructor is different from the one or more second instructors.

Clause 63 includes the system of any of Clauses 34-62, wherein the one or more processors are further configured to receive the first training performance data by: receiving a plurality of performance data requirements; processing the plurality of performance data requirements to generate a single data mapping for the plurality of performance data requirements; and generating the first training performance data. Clause 64 includes the system of Clause 63, wherein the one or more processors are further configured to store the correlation and the training modification recommendation in a memory.

Clause 65 includes the system of Clause 63 or 64, wherein the one or more processors are further configured to generate a performance dashboard based at least on the first training performance data set, the correlation, and the training modification recommendation.

Clause 66 includes the system of Clause 65, wherein the performance dashboard includes an indication that the first training performance data set indicates that performance of a first group of users of the automated training system associated with the first training performance data set fails to satisfy a performance threshold.

According to Clause 67, a non-transient, computer-readable medium storing instructions executable by one or more processors to perform operations that include receiving a first training performance data set. The operations also include analyzing the first training performance data set to determine a correlation between the first training performance data set and a training data comparison set. The operations also include generating a training modification recommendation for an automated training system based at least on the correlation. The operations also include communicating the training modification recommendation to the automated training system.

Clause 68 includes the non-transient, computer-readable medium of Clause 67, wherein the training data comparison set includes a second training performance data set.

Clause 69 includes the non-transient, computer-readable medium of Clause 68, wherein the training data comparison set includes a control performance data set.

Clause 70 includes the non-transient, computer-readable medium of Clause 68 or 69, wherein: the first training performance data set includes training data associated with a first group of users of the automated training system; and the second training performance data set includes training data associated with a second group of users of the automated training system.

Clause 71 includes the non-transient, computer-readable medium of Clause 70, wherein the first group of users is different from the second group of users.

Clause 72 includes the non-transient, computer-readable medium of Clause 70 or 71, wherein the first group of users is associated with training in a first training curriculum, and the second group of users is associated with the first group of users training in a second training curriculum.

Clause 73 includes the non-transient, computer-readable medium of any of Clauses 70-72, wherein the first group of users is associated with a first geographical area and the second group of users is associated with a second geographical area.

Clause 74 includes the non-transient, computer-readable medium of any of Clauses 70-73, wherein the first group of users is associated with a first instructor and the second group of users is associated with a second instructor.

Clause 75 includes the non-transient, computer-readable medium of any of Clauses 70-74, wherein the first group of users is associated with a first training location and the second group of users is associated with a second training location.

Clause 76 includes the non-transient, computer-readable medium of any of Clauses 67-75, further including: determining a first distribution of values based on the first training performance data set; and determining a skewness metric based on the first distribution of values; and wherein generating the training modification recommendation for the automated training system is further based at least on the skewness metric.

Clause 77 includes the non-transient, computer-readable medium of any of Clauses 67-76, further including: determining a first distribution of values based on the first training performance data set; and determining a kurtosis metric based on the first distribution of values; and wherein generating the training modification recommendation for the automated training system is further based at least on the kurtosis metric.

Clause 78 includes the non-transient, computer-readable medium of any of Clauses 67-77, wherein the training modification recommendation includes an alert indicating training performance fails to satisfy a performance threshold.

Clause 79 includes the non-transient, computer-readable medium of any of Clauses 67-78, wherein the training modification recommendation includes a recommendation to update training material.

Clause 80 includes the non-transient, computer-readable medium of any of Clauses 67-79, wherein the training modification recommendation includes an indication of a corrective action associated with one or more users of the automated training system.

Clause 81 includes the non-transient, computer-readable medium of any of Clauses 67-80, wherein the training modification recommendation includes a training performance report.

Clause 82 includes the non-transient, computer-readable medium of Clause 81, wherein the training performance report includes a graphical representation based at least on the correlation.

Clause 83 includes the non-transient, computer-readable medium of Clause 82, further including: analyzing the first training performance data set to determine one or more values of a first training metric based on the first training performance data set; analyzing the first training performance data set to determine one or more values of a second training metric based on the first training performance data set; and wherein a first axis of the graphical representation is associated with the first training metric and a second axis of the graphical representation is associated with the second training metric.

Clause 84 includes the non-transient, computer-readable medium of Clause 83, further including determining a first distribution of values based on the first training performance data set, and wherein the first training metric is a skewness metric based on the first distribution of values.

Clause 85 includes the non-transient, computer-readable medium of Clause 84, wherein the second training metric is a kurtosis metric based on the first distribution of values.

Clause 86 includes the non-transient, computer-readable medium of any of Clauses 83-85, further including determining a first distribution of values based on the first training performance data set, and wherein the first or second training metric is a mathematical moment metric based on the first distribution of values.

Clause 87 includes the non-transient, computer-readable medium of any of Clauses 67-86, wherein analyzing the first training performance data set to determine the correlation includes analyzing the first training performance data set to determine a concordance correlation coefficient associated with the first training performance data set and the training data comparison set.

Clause 88 includes the non-transient, computer-readable medium of any of Clauses 67-87, wherein the first training performance data set includes a plurality of grading metrics assigned to a user of the automated training system.

Clause 89 includes the non-transient, computer-readable medium of any of Clauses 67-88, wherein: the training data comparison set includes a second training performance data set; the first training performance data set includes training data associated with a first group of users of the automated training system, the first group of users assigned to a first instructor; and the second training performance data set includes training data associated with a second group of users of the automated training system, the second group of users assigned to one or more second instructors; and further including: determining a first distribution of values based on the first training performance data set; determining a skewness metric based on the first distribution of values; and determining a kurtosis metric based on the first distribution of values; and wherein the training modification recommendation includes an indication of an instructor performance associated with the first instructor, the indication based at least on the skewness metric and the kurtosis metric.

Clause 90 includes the non-transient, computer-readable medium of Clause 89, wherein the first instructor is associated with a first airline and the one or more second instructors are associated with a second airline.

Clause 91 includes the non-transient, computer-readable medium of Clause 89 or 90, wherein the first instructor is associated with a first airline and the one or more second instructors are associated with the first airline, and wherein the first instructor is different from the one or more second instructors.

Clause 92 includes the non-transient, computer-readable medium of any of Clauses 89-91, wherein the first instructor is associated with a first geographic region and the one or more second instructors is associated with a second geographic region.

Clause 93 includes the non-transient, computer-readable medium of any of clauses 89-92, wherein the first instructor is associated with a first geographic region and the one or more second instructors are associated with the first geographic region, and wherein the first instructor is different from the one or more second instructors.

Clause 94 includes the non-transient, computer-readable medium of any of Clauses 89-93, wherein the first instructor is associated with a first curriculum competency and the one or more second instructors is associated with a second curriculum competency.

Clause 95 includes the non-transient, computer-readable medium of any of Clauses 89-94, wherein the first instructor is associated with a first curriculum competency and the one or more second instructors are associated with the first curriculum competency, and wherein the first instructor is different from the one or more second instructors.

Clause 96 includes the non-transient, computer-readable medium of any of Clauses 67-95, wherein receiving the first training performance data includes: receiving a plurality of performance data requirements; processing the plurality of performance data requirements to generate a single data mapping for the plurality of performance data requirements; and generating the first training performance data.

Clause 97 includes the non-transient, computer-readable medium of Clause 96, further including storing the correlation and the training modification recommendation in a memory.

Clause 98 includes the non-transient, computer-readable medium of Clause 96 or 97, further including generating a performance dashboard based at least on the first training performance data set, the correlation, and the training modification recommendation.

Clause 99 includes the non-transient, computer-readable medium of Clause 98, wherein the performance dashboard includes an indication that the first training performance data set indicates that performance of a first group of users of the automated training system associated with the first training performance data set fails to satisfy a performance threshold.

According to Clause 100, a device includes means for receiving a first training performance data set. The device also includes means for analyzing the first training performance data set to determine a correlation between the first training performance data set and a training data comparison set. The device also includes means for generating a training modification recommendation for an automated training system based at least on the correlation. The device also includes means for communicating the training modification recommendation to the automated training system.

Clause 101 includes the device of Clause 100, wherein the training data comparison set includes a second training performance data set.

Clause 102 includes the device of Clause 101, wherein the training data comparison set includes a control performance data set.

Clause 103 includes the device of Clause 101 or 102, wherein: the first training performance data set includes training data associated with a first group of users of the automated training system; and the second training performance data set includes training data associated with a second group of users of the automated training system.

Clause 104 includes the device of Clause 103, wherein the first group of users is different from the second group of users.

Clause 105 includes the device of Clause 103 or 104, wherein the first group of users is associated with training in a first training curriculum, and the second group of users is associated with the first group of users training in a second training curriculum.

Clause 106 includes the device of any of Clauses 103-105, wherein the first group of users is associated with a first geographical area and the second group of users is associated with a second geographical area.

Clause 107 includes the device of any of Clauses 103-106, wherein the first group of users is associated with a first instructor and the second group of users is associated with a second instructor.

Clause 108 includes the device of any of Clauses 103-107, wherein the first group of users is associated with a first training location and the second group of users is associated with a second training location.

Clause 109 includes the device of any of Clauses 100-108, further including: means for determining a first distribution of values based on the first training performance data set; and means for determining a skewness metric based on the first distribution of values; and wherein generating the training modification recommendation for the automated training system is further based at least on the skewness metric.

Clause 110 includes the device of any of Clauses 100-109, further including: means for determining a first distribution of values based on the first training performance data set; and means for determining a kurtosis metric based on the first distribution of values; and wherein generating the training modification recommendation for the automated training system is further based at least on the kurtosis metric.

Clause 111 includes the device of any of Clauses 100-110, wherein the training modification recommendation includes an alert indicating training performance fails to satisfy a performance threshold.

Clause 112 includes the device of any of Clauses 100-111, wherein the training modification recommendation includes a recommendation to update training material.

Clause 113 includes the device of any of Clauses 100-112, wherein the training modification recommendation includes an indication of a corrective action associated with one or more users of the automated training system.

Clause 114 includes the device of any of Clauses 100-113, wherein the training modification recommendation includes a training performance report.

Clause 115 includes the device of Clause 114, wherein the training performance report includes a graphical representation based at least on the correlation.

Clause 116 includes the device of Clause 115, further including: means for analyzing the first training performance data set to determine one or more values of a first training metric based on the first training performance data set; means for analyzing the first training performance data set to determine one or more values of a second training metric based on the first training performance data set; and wherein a first axis of the graphical representation is associated with the first training metric and a second axis of the graphical representation is associated with the second training metric.

Clause 117 includes the device of Clause 116, further including means for determining a first distribution of values based on the first training performance data set, and wherein the first training metric is a skewness metric based on the first distribution of values.

Clause 118 includes the device of Clause 117, wherein the second training metric is a kurtosis metric based on the first distribution of values.

Clause 119 includes the device of Clause 118, further including means for determining a first distribution of values based on the first training performance data set, and wherein the first or second training metric is a mathematical moment metric based on the first distribution of values.

Clause 120 includes the device of any of Clauses 100-119, wherein analyzing the first training performance data set to determine the correlation includes analyzing the first training performance data set to determine a concordance correlation coefficient associated with the first training performance data set and the training data comparison set.

Clause 121 includes the device of any of Clauses 100-120, wherein the first training performance data set includes a plurality of grading metrics assigned to a user of the automated training system.

Clause 122 includes the device of any of Clauses 100-121, wherein: the training data comparison set includes a second training performance data set; the first training performance data set includes training data associated with a first group of users of the automated training system, the first group of users assigned to a first instructor; and the second training performance data set includes training data associated with a second group of users of the automated training system, the second group of users assigned to one or more second instructors; and further including: means for determining a first distribution of values based on the first training performance data set; means for determining a skewness metric based on the first distribution of values; and means for determining a kurtosis metric based on the first distribution of values; and wherein the training modification recommendation includes an indication of an instructor performance associated with the first instructor, the indication based at least on the skewness metric and the kurtosis metric.

Clause 123 includes the device of Clause 122, wherein the first instructor is associated with a first airline and the one or more second instructors are associated with a second airline.

Clause 124 includes the device of Clause 122 or 123, wherein the first instructor is associated with a first airline and the one or more second instructors are associated with the first airline, and wherein the first instructor is different from the one or more second instructors.

Clause 125 includes the device of any of Clauses 122-124, wherein the first instructor is associated with a first geographic region and the one or more second instructors is associated with a second geographic region.

Clause 126 includes the device of any of Clauses 122-126, wherein the first instructor is associated with a first geographic region and the one or more second instructors are associated with the first geographic region, and wherein the first instructor is different from the one or more second instructors.

Clause 127 includes the device of any of Clauses 122-126, wherein the first instructor is associated with a first curriculum competency and the one or more second instructors is associated with a second curriculum competency.

Clause 128 includes the device of any of Clauses 122-127, wherein the first instructor is associated with a first curriculum competency and the one or more second instructors are associated with the first curriculum competency, and wherein the first instructor is different from the one or more second instructors.

Clause 129 includes the device of any of Clauses 100-128, wherein receiving the first training performance data includes: receiving a plurality of performance data requirements; processing the plurality of performance data requirements to generate a single data mapping for the plurality of performance data requirements; and generating the first training performance data.

Clause 130 includes the device of Clause 129, further including means for storing the correlation and the training modification recommendation in a memory.

Clause 131 includes the device of Clause 129 or 130, further including generating a performance dashboard based at least on the first training performance data set, the correlation, and the training modification recommendation.

Clause 132 includes the device of Clause 131, wherein the performance dashboard includes an indication that the first training performance data set indicates that performance of a first group of users of the automated training system associated with the first training performance data set fails to satisfy a performance threshold.

## Claims

1. A method (300) comprising:
receiving (302) a first training performance data set (128);
analyzing (304) the first training performance data set to determine a correlation (132) between the first training performance data set and a training data comparison set (130);
generating (306) a training modification recommendation (134) for an automated training system (104) based at least on the correlation; and
communicating (308) the training modification recommendation to the automated training system.

2. The method of claim 1, wherein the training data comparison set comprises a second training performance data set.

3. The method of claim 2, wherein:
the first training performance data set comprises training data associated with a first group of users (116) of the automated training system; and
the second training performance data set comprises training data associated with a second group of users (116) of the automated training system.

4. The method of claim 3, wherein the first group of users is associated with at least one of:
training in a first training curriculum, and the second group of users is associated with the first group of users training in a second training curriculum;
a first geographical area and the second group of users is associated with a second geographical area;
a first instructor (118) and the second group of users is associated with a second instructor (118); or
a first training location (120) and the second group of users is associated with a second training location (120).

5. The method of any one of claims 1-4, further comprising:
determining a first distribution of values (139) based on the first training performance data set; and
determining a skewness metric (140) based on the first distribution of values; and
wherein generating the training modification recommendation for the automated training system is further based at least on the skewness metric.

6. The method of any one of claims 1-5, further comprising:
determining a first distribution of values based on the first training performance data set; and
determining a kurtosis metric (142) based on the first distribution of values; and
wherein generating the training modification recommendation for the automated training system is further based at least on the kurtosis metric.

7. The method of any one of claims 1-6, wherein the training modification recommendation comprises an alert indicating training performance fails to satisfy a performance threshold (144), a recommendation to update training material, or an indication of a corrective action associated with one or more users of the automated training system.

8. The method of any one of claims 1-7, wherein the training modification recommendation comprises a training performance report.

9. The method of claim 8, wherein the training performance report comprises a graphical representation (138) based at least on the correlation, the method further comprising:
analyzing the first training performance data set to determine one or more values of a first training metric based on the first training performance data set;
analyzing the first training performance data set to determine one or more values of a second training metric based on the first training performance data set; and
wherein a first axis (146) of the graphical representation is associated with the first training metric and a second axis (148) of the graphical representation is associated with the second training metric.

10. The method of claim 9, further comprising determining a first distribution of values based on the first training performance data set, and wherein the first training metric is a skewness metric based on the first distribution of values.

11. The method of claim 10, wherein the second training metric is a kurtosis metric based on the first distribution of values.

12. The method of claim 9, further comprising determining a first distribution of values based on the first training performance data set, and wherein the first or second training metric is a mathematical moment metric based on the first distribution of values.

13. The method of any one of claims 1-12, wherein analyzing the first training performance data set to determine the correlation comprises analyzing the first training performance data set to determine a concordance correlation coefficient associated with the first training performance data set and the training data comparison set.

14. A computer program comprising computer program instructions that, when executed by a computer processor, cause the computer processor to perform the method of any of claims 1 to 13.

15. A system comprising:
a memory (108) configured to store instructions; and
one or more processors (106) configured to carry out the method of any of claims 1 to 13.
